# EUROPÄISCHE PATENTSCHRIFT

(11) **EP 2 711 701 B1**
(45) Veröffentlichungstag und Bekanntmachung des Hinweises auf die Patenterteilung: **13.06.2018**
(21) Anmeldenummer: 12401189.1
(22) Anmeldetag: 21.09.2012
(51) Int. Cl.: G01N 33/02, G01N 23/083

(54) **Verfahren zum Durchleuchten von Produkten**
Method for transillumination of products
Procédé d'examen de produits par transillumination

(43) Veröffentlichungstag der Anmeldung: 26.03.2014
(73) Patentinhaber: Wipotec Wiege- und Positioniersysteme GmbH, 67657 Kaiserslautern (DE)
(72) Erfinder: Düppre, Theo, 67663 Kaiserslautern (DE)
(74) Vertreter: Eder, Christian

(56) Entgegenhaltungen:
- EP-A1- 1 279 950
- WO-A1-96/13340
- DE-A1-102009 051 643
- US-A- 5 428 657
- US-A- 5 629 966

## Beschreibung

Die Erfindung betrifft ein Verfahren zum Durchleuchten von Produkten, insbesondere von Lebensmitteln, sowie eine Vorrichtung hierfür.

Derartige Vorrichtungen und Verfahren finden beispielsweise in der Lebensmittelverarbeitung Anwendung. So werden in einer Produktionslinie, insbesondere einer Verarbeitungslinie, Eigenschaften von Produkten untersucht, wobei die Untersuchungsergebnisse hinsichtlich der weiteren Verarbeitung vielfältig verwendet werden können. So sollen beispielsweise Fremdkörper detektiert und verunreinigte Produkte aus einem Lebensmittelstrom aussortiert werden. Es sind gegebenenfalls aber auch Fettschichten zu messen, Füllstände zu überwachen, Massen zu bestimmen oder eine Anzahl zu detektieren.

Bekannt ist auch, die korrekte Schnittbreite von Lebensmittelscheiben vorzuermitteln und nachfolgende Schneidwerkzeuge so anzusteuern, dass die gewünschte Scheibendicke oder eine gewünschte Masse exakt abgeschnitten wird.

Zur Erhöhung der Produktionsdurchsatzleistung sind, wie in der DE102005010183B1 vorgeschlagen, moderne Schneidvorrichtungen (sogenannte Slicer) in der Lage, mehr als nur ein Lebensmittel (z.B. einen Riegel) zu zerschneiden. Dabei werden gleichzeitig, also parallel, (mehrspurig) gleich mehrere Lebensmittel zertrennt.

Weiterhin können bei einer in der Medizintechnik angewandten Röntgenuntersuchung mittels dreidimensionaler Analysen hochgenaue Untersuchungen durchgeführt werden. Die verwendeten Techniken sind jedoch sehr teuer und auf unbewegte Objekte spezialisiert.

Bei der Röntgeninspektion im Industriebereich werden dagegen zumeist Platz sparende und kostengünstige Lösungen angestrebt, um mit hoher Geschwindigkeit bewegte Produkte, in einem Produktstrom, zu untersuchen. Dabei soll die Lebensdauer der Röntgenröhre geschont und ein hoher Grad an Röntgensicherheit erzielt werden, obwohl sich permanent Produkte des Produktionsstroms in einen, beispielsweise mittels Schotts, strahlengeschützten Raum hinein und aus diesem wieder heraus bewegen.

Die DE102005010183B1 beschreibt, wie ein Röntgeninspektionssystem Messdaten für mehrere Lebensmittelriegel ermittelt, und wie diese Daten für die individuelle Vorschubsteuerung eines jeden Lebensmittelriegels hin zum nachfolgenden Slicer verwendet werden. Mehrere Lebensmittelriegel werden dabei von einem Röntgenstrahlungsmittel scheibenweise gleichzeitig durchstrahlt.

In der industriellen Produktion liegt oftmals eine umfassende Produktionslinie mit vielen verschiedenen Prozessarbeitsschritten vor, in welche die Röntgeninspektionseinheit hinein integriert werden muss, ohne die vorhandenen Abläufe wesentlich zu verändern. Daher muss sich die Röntgeninspektionseinheit an die vorhandenen Abläufe anpassen, insbesondere an die Transportgeschwindigkeit des Produktstroms.

In der industriellen Produktion umfasst ein Produktstrom aus einer Vielzahl von aufeinander folgenden und nacheinander zu durchleuchtenden Produkten regelmäßig mehrere Spuren bzw. mehrere Teilströme. Derartige sogenannte parallele (mehrspurige) Produktströme sind zumeist durch zueinander äquidistante seitliche Abstände (quer zur Transportrichtung gesehen) charakterisiert. Bei der Röntgeninspektion bzw. Durchleuchtung mittels Röntgenstrahlung eines derartigen parallelen Produktstroms treten jedoch Probleme auf, welche sich die Aussagekraft der Ergebnisse der Röntgeninspektion im Vergleich zu einem einspurigen Produktstrom stark verschlechtert.

Der vorliegenden Erfindung liegt daher die Aufgabe zugrunde, ein Verfahren zum Durchleuchtung für parallele Produktströme, insbesondere für Lebensmittel, sowie eine Vorrichtung hierfür zu schaffen, welche auf kostengünstige und einfache Art und Weise eine ausreichende (erforderliche) Genauigkeit der Kontrolle bei ausreichender Verarbeitungsgeschwindigkeit bzw. Durchsatzleistung ermöglicht.

Diese Aufgabe wird erfindungsgemäß durch ein Verfahren mit den Merkmalen des Patentanspruchs 1 sowie durch eine Kontrollvorrichtung mit den Merkmalen des Patentanspruchs 8 und eine Anordnung mit den Merkmalen des Anspruchs 11 gelöst.

Bei einem Durchleuchten von parallelen Produktströmen, bei dem die Produkte in Förderrichtung - üblicherweise auf einem gemeinsamen Förderband - in einer Mehrzahl mehreren Spuren, vorzugsweise äquidistant, nebeneinander gefördert werden, konnten vor allem folgende Problemursachen ausfindig gemacht werden.

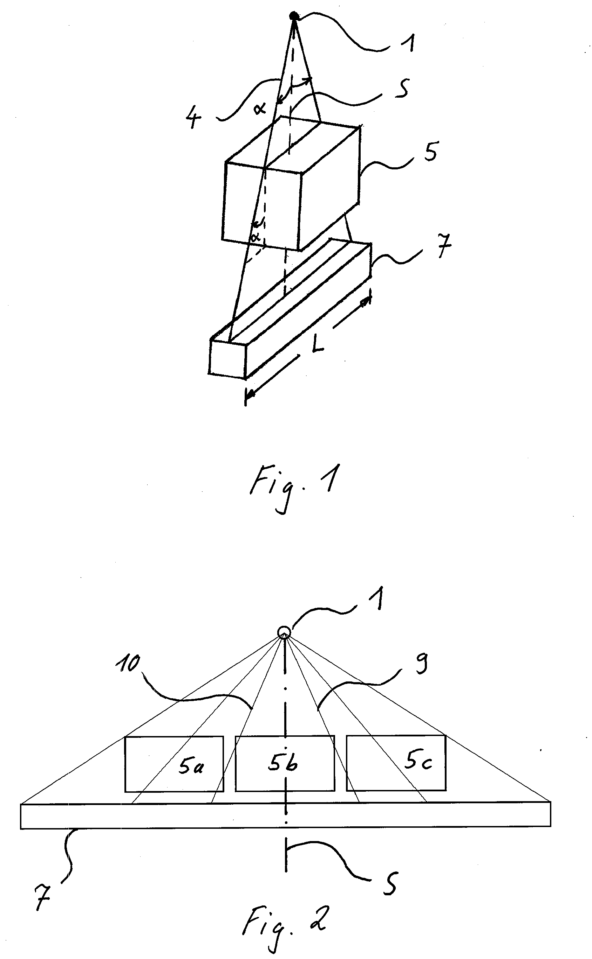

In der industriellen Röntgeninspektion werden aus Kostengründen preiswerte Röntgenquellen verwendet, die zudem aus Arbeitsschutzgründen eine geringe Intensität besitzen. Bei derartigen Röntgenquellen handelt es sich um punktförmige Strahlungsquellen, welche durch Abschirmmaßnahmen ein fächerartiges Strahlenbündel (im Querschnitt zeilenförmig) aussenden (der Rest der Strahlung kann beispielsweise durch einen Spalt abgeschattet sein). Aufgrund der punktförmigen Strahlenquelle muss der (ein- oder mehrzeilig ausgebildete) Strahlenempfänger (Detektor) breiter ausgeführt sein, als der Produktstrom (siehe Figur 1).

Sobald der Strahlenweg von der Quelle zum Detektor nicht mehr senkrecht, sondern unter einem Winkel zur dieser (Mittel-)Senkrechten verläuft, verlängert sich der Strahlenweg von Quelle zum Detektor in Abhängigkeit von diesem Winkel.

Je nach Breite und Höhe der im Produktstrom zu untersuchenden Produkte ergeben sich Abschattungseffekte zwischen den quer zum Produktstrom (entlang der Detektorzeile) benachbarten Produkten, die eine eindeutige Zuordnung der beim Durchleuchten bzw. Durchstrahlen erzeugten Bildpixel zum Produkt verhindern, weil derselbe Röntgenstrahl gleich durch zwei seitlich benachbarte Produkte hindurch tritt (siehe Figur 2). Bei Vorliegen von Abschattungen in einem parallelen Produktstrom ist keine eindeutige Zuordnung des Strahlenbildes (Grauwert des Pixels) zu einem bestimmten Produkt bzw. zur Produktspur mehr möglich. Im Sinne der Erfindung wird unter Röntgeninspektion ein Durchleuchten bzw. Durchstrahlen verstanden.

Erfindungsgemäß wurde erkannt, dass bei einem parallelen Produktstrom mit mehreren, quer zur Transportrichtung gesehen (längs entlang einer Detektorzeile bzw. - zeilen) benachbarten Produkten ein Durchleuchten dann eine ausreichende Qualität der Untersuchungsergebnisse liefert, wenn Abschattungen zwischen seitlich benachbarten Produkten vermieden werden.

Um jegliche Abschattungseffekte zu vermeiden, könnte der Abstand zwischen Strahlenquelle und Produkt theoretisch auf Unendlich vergrößert werden, so dass eine quasi parallele Röntgenstrahlung entstünde. Dies würde aber den erforderlichen Bauraum (die Bauhöhe) der Vorrichtung in ungewünschter und unzulässiger Weise vergrößern. Die allgemeine Forderung nach kleiner Bauhöhe und kleinem Abstand zwischen Strahlenquelle und Produkt sind konträr zur notwendigen Vermeidung von Abschattungseffekten.

Nach der Erfindung werden mehrere quer zum Produktstrom benachbarte (in jeder Richtung quer zur Transportrichtung gesehen, also seitlich, übereinander, etc.) Produkte für das Durchleuchten als eine Gruppe zusammen in einen strahlengeschützten Röntgenraum übernommen und in einer Weise umgeordnet bzw. umgruppiert (mit einer Änderung der bestehenden Anordnung), dass während des Durchleuchtungsvorgangs das Durchleuchten vereinfacht und insbesondere Abschattungseffekte verringert oder gar gänzlich vermieden werden.

Ein strahlengeschützter Raum beschreibt hierbei einen Raum, der eine im Inneren vorhandene Strahlung nicht oder nur in geringer zulässiger Weise (Arbeitsschutz) nach außen dringen lässt.

Nach der Erfindung werden zudem mehrere im Produktstrom benachbarte Produkte in einem einzigen Vorgang automatisch, ohne manuelle Einflussnahme (beispielsweise mittels Aktuatoren, motorbetrieben, pneumatisch, per Druckluft, etc. und mittels entsprechender Steuerung), in den strahlengeschützten Raum aufgenommen und vorzugsweise wieder abgegeben. Auf diese Weise müssen Strahlenschutzeinrichtungen, wie Schotts, Vorhänge, Rampen etc. nur einmal für mehrere benachbarte Produkte geöffnet und/oder durchlaufen werden, so dass vorteilhafterweise keine Zeitverzögerungen (für ein mehrmaliges Öffnen und/oder Durchlaufen) auftreten. Eine Gefährdung der Umgebung außerhalb des strahlengeschützten Raums kann hierdurch in unveränderter Sicherheit (Arbeitsschutz) vermieden werden.
Zu untersuchende Produkte sind im Sinne der Erfindung Produkte aller Art, vorzugsweise mit fester Konsistenz, insbesondere Lebensmittel, wie beispielsweise Lebensmittelriegel.
Die erfindungsgemäße Umordnung umfasst, wie im Folgenden erläutert, eine Serialisierung der Produkte so dass wenigstens ein Produkt pro Durchleuchtungsvorgang, vorzugsweise zeilenförmig (scheibenweise) untersucht wird. Gemäß der Erfindung wird der mehrspurige Produktstrom für das Durchleuchten der Produkte mechanisch von einer Anzahl von n Spuren auf eine Anzahl von m Spuren reduziert, so dass nur Gruppen von ausreichend beabstandeten Produkten (m>1) oder ein einzelnes Produkt (m=1) durch den Röntgenstrahl bewegt (Durchleuchtungsvorgang) werden bzw. wird. Hierbei erfolgt die Umgruppierung vorzugsweise derart, dass der resultierende Produktstrom von m Spuren zur Quelle hin bzw. zur Mittelsenkrechten des Strahls zentriert wird. Auch im Falle von Gruppen von mehreren Produkten (mehrspuriges bzw. paralleles Durchleuchten) werden hierdurch weiter außen liegende Produkte bzw. Spuren vermieden, bei welchen aufgrund des größeren seitlichen Abstandes zur Quelle stärkere Abschattungseffekte auftreten würden.

Diese Verringerung der Anzahl von Spuren (n auf m) kann als Serialisierung verstanden werden, wobei im Sinne der Erfindung unter Serialisierung nicht nur ein Scannen eines einzelnen Produkts, sondern auch das Scannen von mehren, beispielsweise zwei, in einer Gruppe befindlichen, (quer zum Produktstrom) benachbarten Produkten zu verstehen ist, solange die Anzahl der Spuren beim Durchleuchten - im Vergleich zu der Anzahl der vorher bestehenden Spuren - verkleinert wurde.

Bei einem parallelen Durchleuchten weisen die Produkte vorzugsweise - in Richtung Produktstrom gesehen - identische Abmessungen (Länge) auf und werden quer zum Produktstrom ohne Versatz zueinender, also Kopf an Kopf bzw. Vorderflanke an Vorderklanke, durch den Röntgenstrahl bewegt. Es ist aber auch denkbar, Produkte unterschiedlicher Länge und/oder mit Versatz durch den Röntgenstrahl zu bewegen. Die entstehenden Übergänge (Änderung der Anzahl gleichzeitig durchleuchteter Produkte) könnten beispielsweise anhand von sprunghaften Veränderungen der Werte (Absorptionswerte) im Detektor detektiert werden.

In einer weiteren Ausgestaltung der Erfindung werden für das Durchleuchten die parallel bereitgestellten Spuren des mehrspurigen Produktstroms jede für sich einzeln, beispielsweise in unterschiedlicher Geschwindigkeit und/oder unterschiedlichen Schritten, vorwärts bewegt und durch den, beispielsweise stationären, fächerförmigen Röntgenstrahl geführt. Auch durch diese Ausgestaltung können vorteilhafterweise Abschattungen benachbarter Produkte vermieden werden, ohne dass die Produktstromgeschwindigkeit abnimmt oder eine unerwünschte oder gar unzulässige Bauhöhe für die Röntgeninspektionsvorrichtung überschritten wird.

In bevorzugter Ausgestaltung der Erfindung werden die Produkte (und/oder Spuren) nach dem Durchleuchten, insbesondere vor einer Weiterverarbeitung, im Durchleuchtungsraum derart angeordnet, dass ihre relative Position zueinander und/oder zum Produktstrom der Position vor dem Durchleuchten entspricht. Hierdurch kann die Röntgeninspektion vorteilhafterweise ohne Einfluss auf die erforderliche Anordnung zur Weiterverarbeitung stattfinden. In besonders bevorzugter Ausgestaltung der Erfindung findet die gesamte Röntgeninspektion auch zeitlich in einer Weise statt, die es ermöglicht, dass keine oder nur einem minimale Verzögerung hinsichtlich der Produktstrombewegung und der vorhergehenden und/oder folgenden Arbeitsschritte auftritt. Dies kann beispielsweise durch eine höhere Förderbandgeschwindigkeit der einzelnen Bänder bzw. Spur im Durchleuchtungsraum gegenüber der Fördergeschwindigkeit des Produktstroms außerhalb des Durchleuchtungsraums erreicht werden.

Hierdurch ist es vorteilhafterweise möglich, nicht nur Produktionslinien aufzubauen, sondern auch nachzurüsten, ohne dass die Röntgenvorrichtung bei der (bisherigen) Steuerung und Bewegung des Produktstroms berücksichtigt werden muss. Dies ermöglicht ein Integrieren der Röntgeninspektionseinheit bzw. -vorrichtung in eine umfassende Produktionslinie mit vielen verschiedenen Prozessarbeitsschritten, ohne die vorhandenen Abläufe wesentlich zu verändern.

Selbstverständlich ist es denkbar, die Röntgenquelle und/oder den Detektor nicht nur stationär, sondern auch in einem Winkel größer Null, vorzugsweise quer, und/oder parallel zum Produktstrom beweglich auszubilden. Abgesehen von einer Erhöhung der Fördergeschwindigkeit und/oder Änderung der Spurführung (Einzelbänder) kann auch hierdurch eine Änderung der Anordnung der Produkte für das Durchleuchten erreicht und/oder die Durchleuchtgeschwindigkeit erhöht werden.

In weiterer Ausgestaltung der Erfindung wird vor, während oder nach dem Durchleuchten das Gewicht einzelner, quer und/oder in Transportrichtung benachbarter Produkte und/oder deren Gesamtgewicht mittels wenigstens einer Wägezelle oder Waage ermittelt. Das ermittelte Gewicht kann vorteilhafterweise für diverse Inspektionsaufgaben, wie beispielsweise Dichtebestimmung/-überwachung, Fettanalyse oder Schnittbreitenbestimmung von vorgegebenen masserichtigen Lebensmittelscheiben verwendet werden.

Auch wenn eine Ermittlung des Gewichts über eine aufwändige Auswertung der durch die Röntgeninspektion gewonnenen Werte möglich wäre, ist die Ermittlung des Gewichts einzelner Produkte oder des Gesamtgewichts einer Produktgruppe (für ein paralleles Wiegen) mittels Waage bzw. Wägezelle schneller und präziser.

Aufgrund der Bekanntheit des Gewichts und der einzelnen zeilenweise (konstante Dicke) gewonnenen Absorptionswerte (proportional zur Dichte und Dicke/Breite/Höhe) eines Produktes ist es auf einfache Weise möglich, das Gewicht für eine einzelne Scheibe zu ermitteln. Die Dicke einer derartigen gescannten Scheibe ist dabei u.a. abhängig von der Breite der Detektorzeile bzw. -zeilen. Diesen Daten können beispielsweise für eine vorstehend genannte Schnittbreitenbestimmung pro Spur verwendet werden, um einen Slicer entsprechen zu steuern.

Die wenigstens eine Wägezelle oder mindestens eine Waage ist hierbei vorzugsweise in die Röntgenvorrichtung, insbesondere den strahlengeschützten Raum (Röntgenraum), integriert. Dies erspart der Waage bzw. der Wägezelle vorteilhafterweise ein eigenes Gehäuse und einen Windschutz, da der Innenraum der Röntgeninspektionseinrichtung mit Strahlenschutzmaßnahmen versehen ist, welche nicht nur den Austritt von Röntgenstrahlung, sondern auch den (für ein Wiegen nachteiligen) Eintritt von Wind zuverlässig verhindern.

Selbstverständlich können die vorstehend erläuterten Ausgestaltungen der Erfindung beliebig miteinander kombiniert werden, so dass eine Vielzahl von Mischformen möglich ist.

Weitere vorteilhafte Ausgestaltungen der Erfindung ergeben sich aus den abhängigen Ansprüchen.

Die Erfindung wird nachfolgend anhand eines in der Zeichnung dargestellten Ausführungsbeispiels näher erläutert.

In der Zeichnung zeigen:
- Fig. 1: eine perspektivische Ansicht einer schematisch dargestellten Röntgeneinrichtung;
- Fig. 2: eine Querschnittansicht mehrerer Produkte während eines Scans mit einer Röntgeneinrichtung nach Fig. 1;
- Fig. 3: eine Draufsicht auf eine erste Ausführungsform eines Abschnitts einer Produktionslinie mit einer Röntgeneinrichtung nach Fig. 1;
- Fig. 4a: eine Draufsicht auf eine zweite Ausführungsform einer Röntgeneinrichtung nach Fig. 1;
- Fig. 4b: eine Draufsicht auf eine vierte Ausführungsform einer Röntgeneinrichtung nach Fig. 1;
- Fig. 4c: eine Draufsicht auf eine dritte Ausführungsform einer Röntgeneinrichtung nach Fig. 1;
- Fig. 5: eine Draufsicht auf eine zweite Ausführungsform eines Abschnitts einer Produktionslinie mit einer Röntgeneinrichtung nach Fig. 1;
- Fig. 6a: eine Draufsicht auf eine nicht von der Erfindung beanspruchte beispielhafte Ausgestaltung eines Abschnitts einer Produktionslinie mit einer Röntgeneinrichtung nach Fig. 1;
- Fig. 6b: eine Schnittansicht entlang eines Röntgenstrahls 3 in Fig. 6a;
- Fig. 7a: eine Draufsicht auf eine dritte Ausführungsform eines Abschnitt einer Produktionslinie mit einer Röntgeneinrichtung nach Fig. 1;
- Fig. 7b: eine Draufsicht auf eine dritte Ausführungsform eines Abschnitt einer Produktionslinie mit einer Röntgeneinrichtung nach Fig. 1;
- Fig. 8: eine Draufsicht auf die erste Ausführungsform eines Abschnitts nach Fig. 3 mit einer vor und/oder nach der Röntgeneinheit angeordneten Waage;
- Fig. 9: eine Draufsicht auf eine vierte Ausführungsform eines Abschnitt einer Produktionslinie mit einer Röntgeneinrichtung nach Fig. 1 mit einem gemeinsamen Wägeband;
- Fig. 10: eine Draufsicht auf eine fünfte Ausführungsform eines Abschnitt einer Produktionslinie nach Fig. 9 mit einer nach einer Röntgeninspektionseinheit angeordneten Waage und
- Fig. 11: eine schematische Seitenansicht von Fig.10.

Fig. 1 stellt schematisch eine Momentaufnahme eines Durchleuchtungsvorgangs eines Produkts 5 dar. Ein von einer Strahlenquelle 1, insbesondere Röntgenquelle, ausgehender fächerförmiger Strahl 3 durchdringt das Produkt 5, so dass auf der gegenüberliegenden Seite die zeilenförmige, vom Produkt 5 nicht absorbierte Strahlung auf einen Detektor 7 bzw. dessen Detektorzeile oder -zeilen trifft. Detektor 7 und Quelle 1 sind erfindungsgemäß in einem Winkel größer Null, vorzugsweise quer zum Produktstrom bzw. zur Transportrichtung, angeordnet.

Abhängig von Breite und Höhe des Produkts 5, sowie Abstand von Quelle 1 zum Produkt 5 und Abstand von Detektor 7 zum Produkt, variiert die notwendige Länge L (im Folgenden auch als Detektorbreite bezeichnet) des Detektors 7. Ursächlich hierfür ist, wie aus Fig. 1 ersichtlich, der Winkel a, den ein seitlicher, das Produkt 5 gerade noch in seinem äußersten Bereich (beispielsweise obere Außenkante) durchdringender Strahl 4 mit einer Senkrechten S (ausgehend von Quelle 1 und senkrecht auf Detektor 7) einschließt.

Wie aus Fig. 2 ersichtlich, können, gerade im Bereich der Strahlen mit größerem Winkel a, an einem benachbarten Produkt Abschattungen auftreten. Ein Strahl 9, welcher die äußersten Bereiche des Produkts 5b durchtritt, durchdringt im Weiteren auch das benachbarte Produkt 5c (in der Zeichnung dessen linke untere Außenkante), bevor er auf den Detektor 7 trifft. Dasselbe trifft auf einen Strahl 10 zu, mit dem Unterschied, dass dieser Strahl 10 den linken äußersten Bereich des Produkts 5b durchtritt, und infolge dessen vor dem Auftreffen auf den Detektor 7 noch die untere rechte Außenkante des Produkts 5a durchdringt. Derartige Abschattungseffekte, welche für außen liegende Produkte bzw. Spuren zunehmen, verfälschen jedoch den Messwert im Detektor 7 derart, dass eine Zuordnung zu einer Spur und/oder zu einem Produkt 5 nicht mehr möglich ist. Unterschiede in der Weglänge durch das Produkt aufgrund unterschiedlicher Winkel sind dagegen vernachlässigbar bzw. über entsprechende Korrekturverfahren bei der Auswertung gelöst.

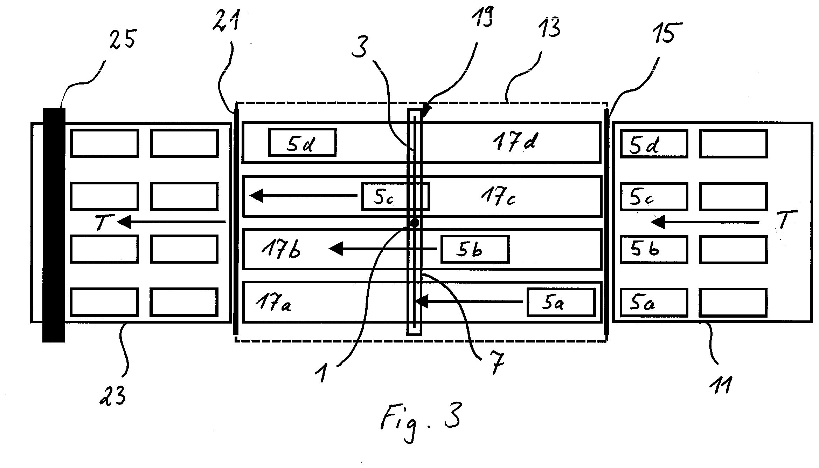

Die in Fig. 3 dargestellte erste Ausführungsform eines Abschnitts einer Produktionslinie mit einer aus einer Quelle 1 und einen Detektor 7 bestehenden Röntgeneinrichtung 19 nach Fig. 1 zeigt eine erfindungsgemäße Serialisierung der Produkte 5 bzw. 5a, 5b, 5c, 5d. Hierbei werden die Produkte 5a, 5b, 5c, 5d, welche sich seitlich, äquidistant und Kopf an Kopf bzw. Vorderflanke an Vorderflanke nebeneinander im Produktstrom auf einem Zuführband 11 befinden, gemeinsam in einen strahlengeschützten Raum bzw. Durchleuchtungsraum 13, insbesondere Röntgenraum, durch Öffnen und Schließen einer Strahlenschutzeinrichtung, beispielsweise eines Einlass-Schotts 15, parallel übergeben.

Nach dem gemeinsamen Einfahren der Produkte 5a, 5b, 5c, 5d als Gruppe in den Röntgenraum und nach dem Schließen des Einlass-Schotts 15 werden die parallel bereitgestellten Produktspuren 17 bzw. 17a, 17b, 17c, 17d jede für sich getrennt einzeln vorwärts bewegt und einzeln durch den Röntgenstrahl 3 geführt. Dadurch werden Abschattungen sicher vermieden.

Zeitlich nacheinander werden nun alle Produkte 5a, 5b, 5c, 5d der einzelnen Spuren 17a, 17b, 17c, 17d vorwärts bewegt, bis alle im Röntgenraum 13 befindlichen Produkte geröntgt sind. Dabei können sich bevorzugt alle einzelnen Spuren 17a, 17b, 17c, 17d gleichzeitig vorwärts bewegen. Es muss lediglich sichergestellt sein, dass zu jedem Zeitpunkt stets nur ein Produkt durchstrahlt wird.

Die Transportgeschwindigkeit im Inneren der Röntgeninspektionsvorrichtung bzw. im Röntgenraum 13 kann wesentlich höher sein, als außerhalb des Röntgenraums 13 vom Produktionsstrom vorgegeben, da im Röntgenraum 13 mindestens ein separates Transportsystem, beispielsweise in Form von separat ansteuerbaren Einzelspuren (Einzelgurten) bzw. Einzelbändern 17a, 17b, 17c, 17d, vorhanden ist.

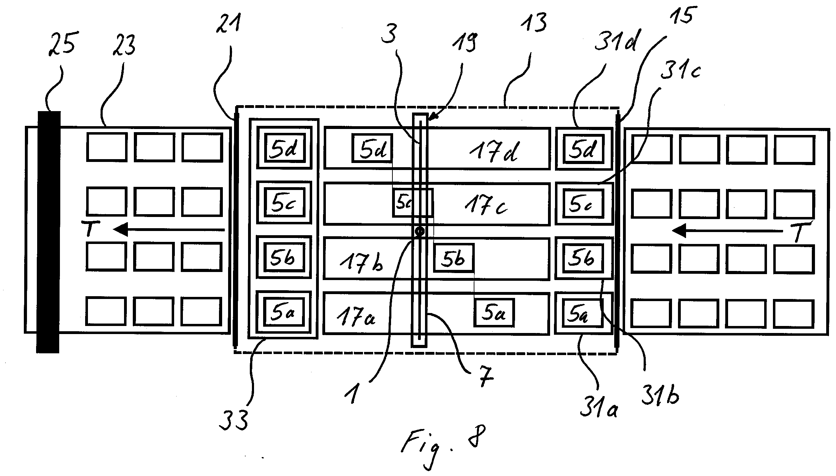

Wie aus Fig. 8 ersichtlich, kann bei gleich langen Produkten 5, aber auch bei unterschiedlich langen Produkten 5, das nachfolgende Produkt mit seiner Vorderkante bzw. -flanke vorzugsweise so nahe an die Rückflanke des vorhergehenden Produkts 5a zu 5b, 5b zu 5c, 5c zu 5d herangefahren werden, dass nahezu keine Lücke auftritt und keine Prozesszeit verschenkt wird.

Nachdem alle einzelnen Produkte 5 bzw. 5a, 5b, 5c, 5d auf ihren jeweiligen Spuren 17a, 17b, 17c, 17d den Röntgenstrahl 3 passiert haben, können sie je nach benötigter Weiterverarbeitung entweder längs versetzt (seriell) zueinander angeordnet bleiben. Selbstverständlich ist es auch denkbar, die Produkte 5a, 5b, 5c, 5d nach dem Passieren des Röntgenstrahls 3 mittels geeigneter Einrichtungen (Einzeltransportbänder, mechanischer Stopper etc.) in eine zueinander parallele Position (Kopf an Kopf nebeneinander) zu verbringen. Dies ist von besonderem Vorteil, sofern ein nachfolgender Verarbeitungsschritt eine paralle Verarbeitung ermöglicht oder gar erfordert. Beispielsweise können auf diese Weise in einem nachgeordneten Schneidvorgang (Slicer) dann alle Produkte bzw. Spuren parallel geschnitten oder zertrennt werden.

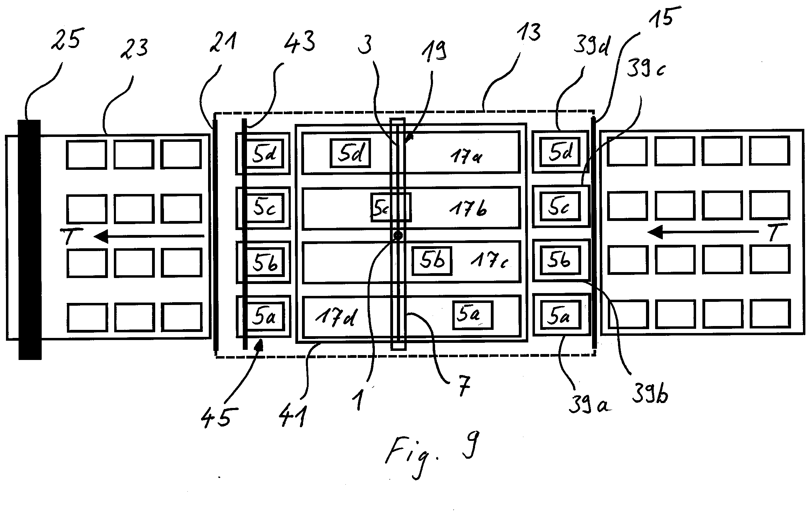

In einer besonderen Ausführungsform, wie beispielsweise in Fig. 8 und Fig. 9 dargestellt, werden die bereits geröntgten Produkte 5 parallel aus dem Röntgenraum 13 herausgeführt. Dies kann bevorzugt in dem selben Takt erfolgen, wie das Beschicken des Röntgenraums 13 mit neuen Produkten 5, da während beider Vorgänge (Ein- und Ausfahren) aus Sicherheitsgründen ein Abschalten der Quelle 1 und damit der Röntgenstrahlung erforderlich sein kann.

Das Einbringen der Produkte 5 in den Röntgenraum 13, und/oder auch deren Ausbringen aus diesem, kann sowohl seriell als auch parallel erfolgen. Die erfindungsgemäße Serialisierung für die Röntgeninspektion und vorzugsweise nachfolgende Parallelisierung wird bevorzugt im Röntgenraum 13 durchgeführt, da sich hierdurch Vorteile beim Öffnen und/oder Schließen der Einlass-Schotts 15 und Auslass-Schotts 21 (geringere Anzahl der Öffnungs-/Schließvorgänge, kürzere Öffnungszeiten, etc.) ergeben. Selbstverständlich ist es aber auch denkbar, die Serialisierung und/oder Parallelisierung auch außerhalb des Röntgenraums zu bewerkstelligen.

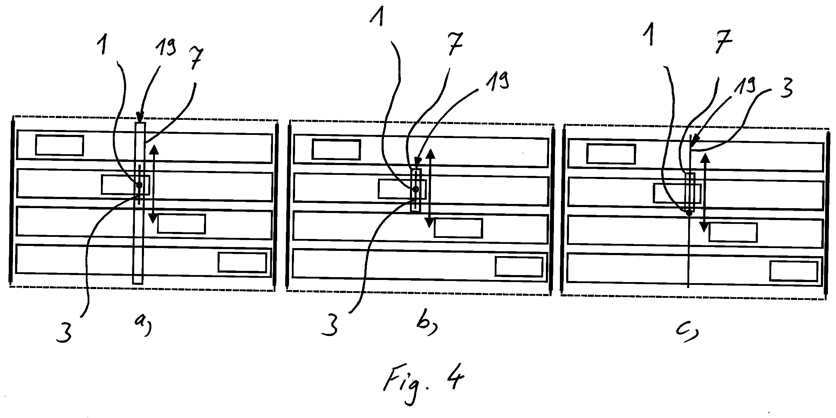

Wie aus Fig. 4a bis Fig. 4c ersichtlich, sind statt einer wie in Fig.1 dargestellten stationären Röntgeneinrichtung 19 mit einer stationären Quelle 1 und einem stationären Detektor 7 auch andere Ausführungsformen von Röntgeneinrichtungen 19 bzw. Röntgeneinheiten möglich. So zeigt Fig. 4a eine zweite Ausführungsform einer Röntgeneinrichtung 19 mit einer über die Scanbreite beweglichen Quelle 1, während der Detektor 7 stationär ausgebildet ist. Der Detektor 7 weist in diesem Fall eine Länge L über die gesamte Scanbreite bzw. Produktstrombreite auf, wohingegen die Ausbreitung des Strahls 3 der beweglichen Quelle 1 nur ein einzelnes Produkt in seiner Spurbreite abdeckt.

Dagegen zeigt Fig. 4c eine dritte Ausführungsform einer Röntgeneinrichtung 19 mit einem über die Scanbreite beweglichen Detektor 7, während die Quelle 1 stationär ausgebildet ist, so dass der fächerförmige Röntgenstrahl 3 über die gesamte Scanbreite bzw, Produktstrombreitereicht und die Detektorbreite nur die (Spur-)Breite eines Produkts 5 abdeckt. Fig. 4b zeigt schließlich eine vierte Ausführungsform einer Röntgeneinrichtung 19, in welcher sowohl Quelle 1 als auch Detektor 7 beweglich ausgebildet sind, um die gesamte Breite der Durchleuchtung (Scan) abzudecken. In diesem Fall besitzen sowohl der Strahl 3 als auch die Detektorbreite gegenüber der gesamten Scanbreite geringe Abmessungen, da hier beispielsweise nur ein Produkt jeweils zentral durchleuchtet werden muss.

Auf diese Weise können Röntgenstrahlbreite und/oder Strahlendetektorlänge (jeweils quer zum Produktstrom bzw. zur Produktförderrichtung) sehr klein und kostengünstig ausgeführt sein. Die benötigte Röntgenleistung ist zudem geringer als bei einer stationären ersten Ausführungsform, wodurch sich auch die Lebensdauer der Komponenten verlängert. Hierdurch können vorteilhafterweise kleinere, kostengünstigere Strahlenschutzmaßnahmen eingesetzt werden.

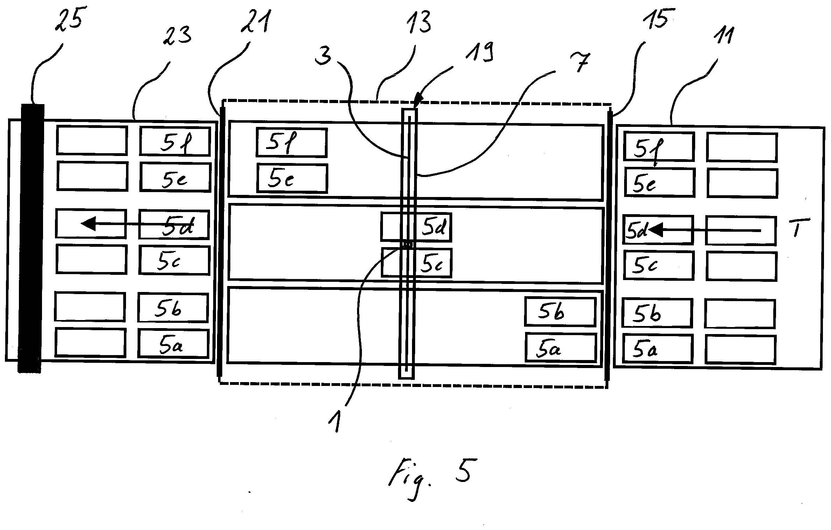

Das vorstehend erläuterte Verfahren der Serialisierung kann in einer zweiten Ausführungsform der Erfindung auch auf Gruppen von mindestens zwei Produkten 5 angewendet werden. Wie aus Fig. 5 ersichtlich, können seitlich benachbarte Produkte 5a, 5b, 5c, 5d, 5e, 5f beispielsweise zu Zweiergruppen (Gruppenanzahl ist immer kleiner als die Anzahl der seitlich benachbarten Produkte) 5a, 5b; 5c, 5d; 5e, 5f zusammengefasst werden. Im Unterschied zur ersten Ausführungsform werden in dieser zweiten Ausführungsform Gruppen von mindestens zwei Produkten 5a, 5b; 5c, 5d; 5e, 5f parallel in Produktspuren 17 bzw. 17a, 17b und 17c bereitgestellt, so dass jede Gruppe für sich getrennt einzeln vorwärts bewegt und einzeln durch den Röntgenstrahl 3 geführt wird. Sollte der Abstand, insbesondere in den Außenspuren 17a und 17c, zwischen den Produkten 5a, 5b und 5e, 5f nicht ausreichen, um Abschattungseffekte zu vermeiden, kann der jeweilige Abstand, wie beispielsweise nachfolgend in einer dritten Ausführungsform beschrieben, vergrößert werden. Es ist aber auch denkbar, wie vorstehend beschrieben, wenigstens die Quelle 1 quer oder schräg zum Produktstrom beweglich auszubilden, um Abschattungseffekte zu vermeiden. Statt der Bildung von direkt benachbarten Produkten zu Gruppen ist es aber auch denkbar weiter voneinander entfernte Produkte zu einer Gruppe (beispielsweise 5a, 5d; 5b, 5e und 5c, 5f) zusammenzufassen.

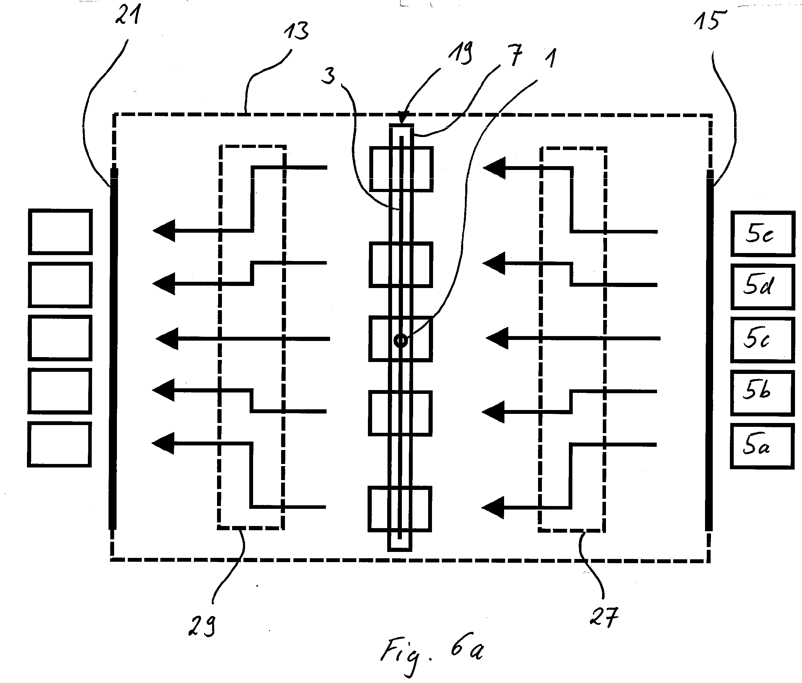

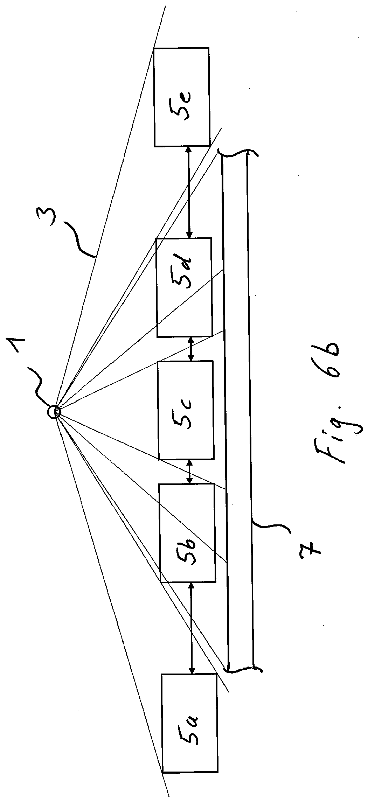

In der in Fig. 6a dargestellten, nicht von der Erfindung erfassten Ausgestaltung, wird die störende Abschattung durch ein seitliches Auseinanderziehen der Spuren erreicht. Dieses Auseinanderziehen bzw. Spreizen der Spuren kann mittels geeigneter mechanischer Einrichtungen 27, wie beispielsweise mechanische (Seiten-)Führungen, stärker beabstandete Einzelbänder, etc. erreicht werden. Hierbei werden äußere Spuren und damit Produkte 5a (zu 5b) und 5e (zu 5d) stärker auseinandergezogen als die weiter innen geführten Produkte 5b und 5d, um die in Fig. 6b dargestellten, im äußeren Bereich größeren Abstände zwischen den Produkten 5a zu 5b und Produkten 5d zu 5e zu erzeugen und auf diese Weise Abschattungseffekte zu vermeiden.
Wie aus Fig. 6b ersichtlich, durchdringt keiner der Strahlen des fächerartigen Röntgenstrahls auf seinem Weg zum Detektor 7 mehr als nur ein Produkt 5a, 5b, 5c, 5d oder 5e. Allerdings erfordert diese Ausgestaltung aufgrund der größeren Winkel α eine entsprechende größere Länge L des Detektors 7. Wird für die weitere Verarbeitung hinter der Röntgeninspektion der ursprüngliche seitliche Produktabstand der Produktionslinie wieder benötigt, so können die Produkte 5 durch eine zweite mechanische Vorrichtung 29 wieder neu ausgerichtet werden. Die zweite mechanische Vorrichtung 29 kann hierbei analog der ersten mechanischen Vorrichung 27 in entsprechender Umkehrung (Verdichten statt Spreizen) ausgebildet sein.

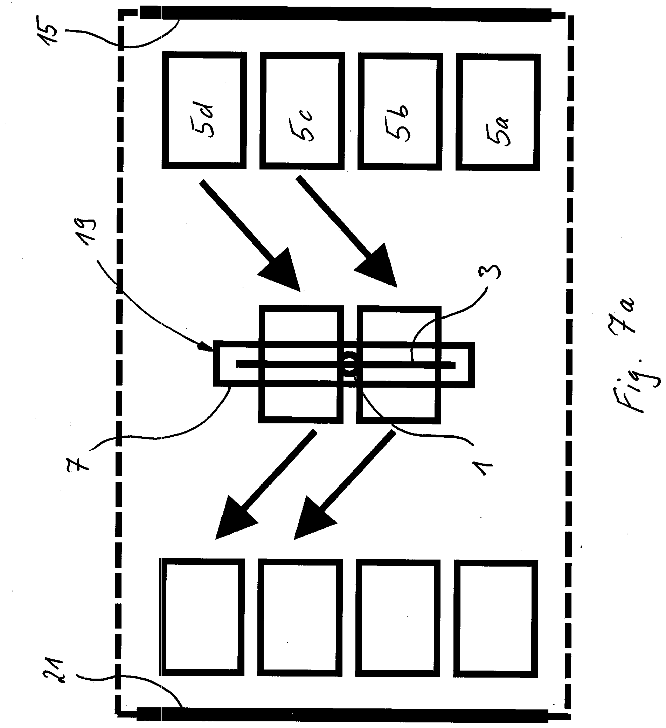

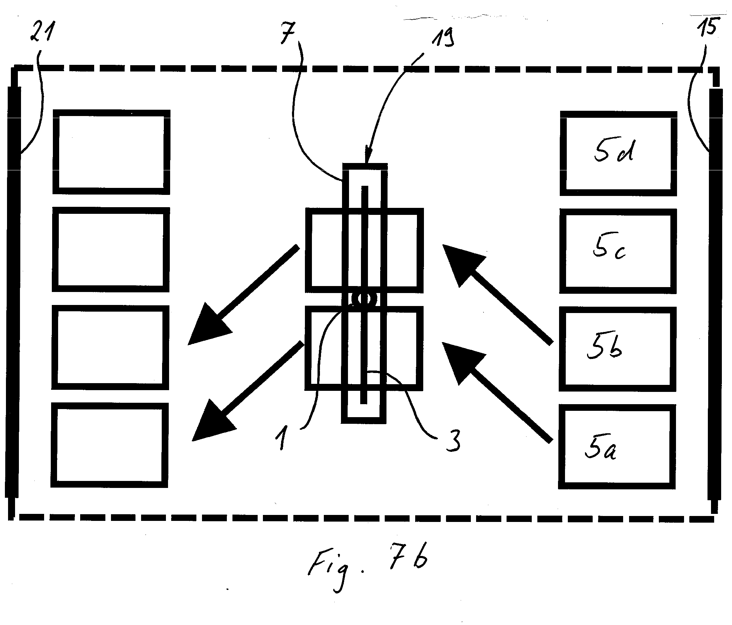

Nach der in Fig. 7a und Fig. 7b dargestellten Ausführungsform der Erfindung ist es auch denkbar, seitlich benachbarte Produkte 5a, 5b, 5c, 5d einzeln oder in Gruppen, beispielsweise Zweiergruppen, nacheinander durch den Röntgenstrahl 3 bzw. die Röntgeneinrichtung 19 zu bewegen. So werden im Unterschied zur vorstehend erläuterten Ausführungsform beispielsweise zuerst die Produkte 5c und 5d (entlang der Pfeile in Fig. 7a) und erst nachfolgend die Produkte 5a und 5b (entlang der Pfeile in Fig. 7b) durchleuchtet. Eine derartige Umgruppierung bzw. Umplatzierung von Produkten erfolgt mittels (mechanischer) Reduzierung der Spuranzahl im Röntgenraum 13, so dass der Produktstrom sequenziell (zeitlich nacheinander ausgeführt) untersucht wird. Das Umgruppieren und Durchleuchten erfolgt vorzugsweise in einer höheren Geschwindigkeit als die (geforderte) Transportgeschwindigkeit des Produktstroms, so dass diese Transportgeschwindigkeit von der Röntgeninspektion unbeeinflusst bleibt. Vorteilhafterweise kann hierbei sowohl die Quelle 1 als auch der Detektor 7 feststehend angeordnet sein.
In bevorzugter Ausgestaltung wird hierbei vermieden, dass eine Strahlenschutzeinrichtung, insbesondere ein Röntgenschott 15, vor jedem einzelnen Produkt 5 bzw. vor jeder Gruppe von Produkten 5a, 5b; 5c, 5d, das/die in den Röntgenraum 13 eingebracht werden oder diesen verlassen, geöffnet und wieder verschlossen werden muss. Dies wird möglich, wenn alle benachbarten Produkte 5a, 5b, 5c, 5d des parallelen Produktstroms - wie in Fig. 7a und Fig. 7b dargestellt - parallel als Gruppe von Produkten 5a, 5b, 5c, 5d in den Röntgenraum 13 übernommen werden. Hierfür muss das Einlass-Schott 15 und ein evtl. vorhandenes Auslass-Schott 21 jeweils nur einmalig geöffnet und geschlossen werden.
Hierdurch kann vorteilhafterweise eine nach außen quasi parallele Röntgeninspektion mit voller Transportgeschwindigkeit der Produktionslinie bzw. des Produktstroms ermöglicht werden. Zudem können hierdurch aufwändige mechanische Vorrichtungen, welche den Bauraum vergrößern und Kosten erzeugen, vermieden werden.

Nach der Erfindung kann in beliebiger Ausgestaltung der Abschnitt einer Produktionslinie mit einer Röntgeneinrichtung 19 zusätzlich mit wenigstens einer Waage bzw. wenigstens einer Wägezelle ausgestattet sein. Diese wenigstens eine Waage dient der Bestimmung des Gewichts der einzelnen Produkte und/oder des Gesamtgewichts einer Gruppe benachbarter und gemeinsam in den Röntgenraum 13 übernommener Produkte 5a, 5b, 5c, 5d. Das Gewicht ist für diverse Inspektionsaufgaben, wie Dichtebestimmung/-überwachung (u.a. Fettanalyse) (beispielsweise aus Volumen und Masse berechnet), Schnittbreitenbestimmung von vorgegebenen masserichtigen Lebensmittelscheiben etc., erforderlich.

Wie in Fig. 8 dargestellt, kann die Waage vor und/oder nach der Röntgeneinheit 19 angeordnet und vorzugsweise in die Röntgeninspektionsvorrichtung bzw. in den Röntgenraum 13 integriert sein. Die Integration kann dabei neben und/oder anstelle der Anordnung in einem gemeinsamen Gehäuse auch die datentechnische Integration in einer gemeinsamen Steuereinheit bedeuten.

Der in Fig. 8 dargestellte Abschnitt einer Produktionslinie entspricht im Wesentlichen der ersten vorstehend erläuterten Ausführungsform eines Abschnitts nach Fig. 3. Zusätzlich ist in Fig. 8 jedoch dargestellt, wie und an welchen Positionen wenigstens eine Waage 33; 31a, 31b, 31c, 31d, vorzugsweise im Röntgenraum 13 angeordnet werden kann. So kann ein Wiegen von Produkte 5a, 5b, 5c, 5d, welche bereits durch das Einlass-Schott15 passierten, windgeschützt (verschlossene Schotts 15 und 21) auf separaten Einzelwaagen 31a, 31b, 31c, 31d bzw. einzelnen Wägezellen mit eigenen Fördermitteln, insbesondere Transportbänder, erfolgen.

Statt der Einzelwaagen 31a, 31b, 31c, 31d ist es auch denkbar, eine gemeinsame Wägeplattform zu verwenden. Diese wird zunächst mit der Gesamtheit der Produkte 5a, 5b, 5c, 5d aller Spuren belastet (Gesamtlast). Nach und nach werden nun die Produkte 5a, 5b, 5c, 5d der einzelnen Spuren von der Wägeplattform herunter zu der Röntgeninspektionseinrichtung 19 hin transportiert. Die beim Herunterfahren von der Wägeplattform entstehende Gewichtsdifferenz wird durch Subtraktion der Gewichtswerte vor und nach dem Heruntertransportieren bestimmt.

Die Trennung von (nachfolgenden und/oder vorangehenden) Waagen 33; 31a, 31b, 31c, 31d und den für die Serialisierung benötigten Einzelförderbändern 17a, 17b, 17c, 17d stellt eine vorteilhafte Ausgestaltung der Erfindung dar, da hierdurch mechanische Auswirkungen der Einzelförderbänder 17a, 17b, 17c, 17d auf den Wiegeprozess vermieden werden können.

Nach der Röntgeninspektionseinheit bzw. -einrichtung 19 kann wiederum getrennt von den Einzelförderbändern 17a, 17b, 17c, 17d eine Gesamtwaage 33 angeordnet sein, welche über alle Spuren wirkt bzw. eine gemeinsame Wägeplattform verwendet, welche alle einzelnen (parallelen) Wägetransportbänder (oder Gruppen davon) trägt.

Da die Produkte 5a, 5b, 5c, 5d nacheinander an der Gesamtwaage 33 eintreffen, kann nicht nur das Gesamtgewicht aller Produkte 5a, 5b, 5c, 5d, sondern auch die Änderung des Gewichts, beispielsweise mittels Differenzwägung (auch Subtraktionswiegen genannt) ermittelt werden.

Nach der in Fig. 9 dargestellten Lösung kann der Aufbau der Gesamtanordnung aber auch dadurch vereinfacht werden, dass die parallelen Transportbänder 17a, 17b, 17c, 17d, welche die Produkte 5a, 5b, 5c, 5d durch den Röntgenstrahl 3 transportieren, selbst als Wägebänder ausgeführt sind, d.h. die Bänder sind mit der oder den Wägeplattform(en) verbunden und werden von dieser als Vorlast getragen.

Unter Inkaufnahme einer eingeschränkten Analysegeschwindigkeit kann anstelle der parallelen Wägebänder und/oder Einzelwaagen selbstverständlich auch ein großes gemeinsames Wägeband oder Wägeplattform verwendet werden, welches sich auf einer einzigen Wägezelle abstützt. Hierdurch würde die Anzahl der messtechnisch störenden Störungen (Unwuchten) vorteilhaft verringert werden. Für die Serialisierung/Parallelisierung ist dann aber mindestens noch ein Satz an parallelen Einzeltransporteinrichtungen erforderlich, der vor oder nach dem Wägeband angeordnet sein kann.

Wägetechnisch ist es von Vorteil, einem Einzelband 17a, 17b, 17c, 17d, wie in Fig. 9 dargestellt, ein sogenanntes Einlaufband 39a, 39b, 39c und 39d vorzuordnen, welches mit der exakt gleichen Geschwindigkeit transportiert wie das jeweilige Einzelband 17a, 17b, 17c, 17d. So werden Übergabeprobleme (Stöße, die Schwingungen des Waagenaufbaus anregen können) zwischen Einlaufband 39a, 39b, 39c und 39d und Einzelband 17a, 17b, 17c, 17d vermieden. Ein Einzelband 17a, 17b, 17c, 17d kann vorzugsweise stets mit konstanter Geschwindigkeit und ohne Unterbrechung fördern. Dadurch würde sich ein kontinuierlicher Produktstrom bei bestmöglicher Wägegenauigkeit ergeben.
Nach dem Röntgen erfolgt die anschließende Parallelisierung entweder durch vier weitere parallele Einzelbänder 45, oder durch mechanische Stopper 43 oder andere Einrichtungen, die die gleiche parallelisierende Wirkung erzielen. Dabei werden die Position und Lage (Drehung, in beliebige Richtung) der Produkte abgesehen von der Parallelisierung nicht nachteilig verändert.
Durch eine nachfolgende Parallelisierung kann in den unterschiedlichen Ausführungsformen eine nachfolgende Verarbeitung, insbesondere exakte Definition von Schnittpositionen nachfolgender Verarbeitungseinrichtungen, beispielsweise Slicer, vereinfacht werden.

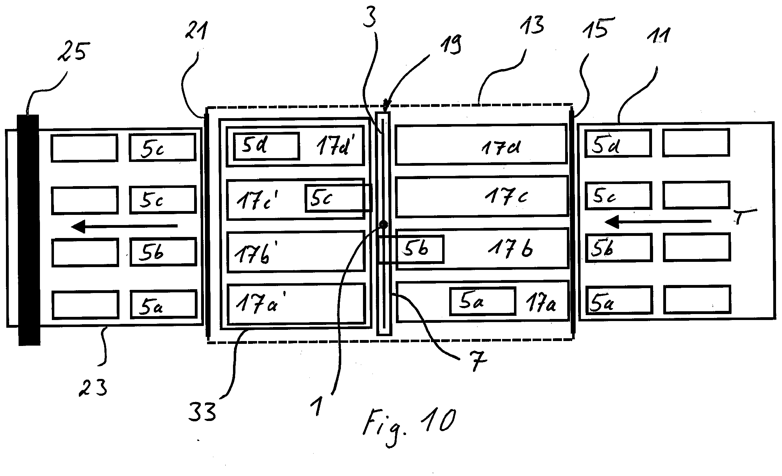

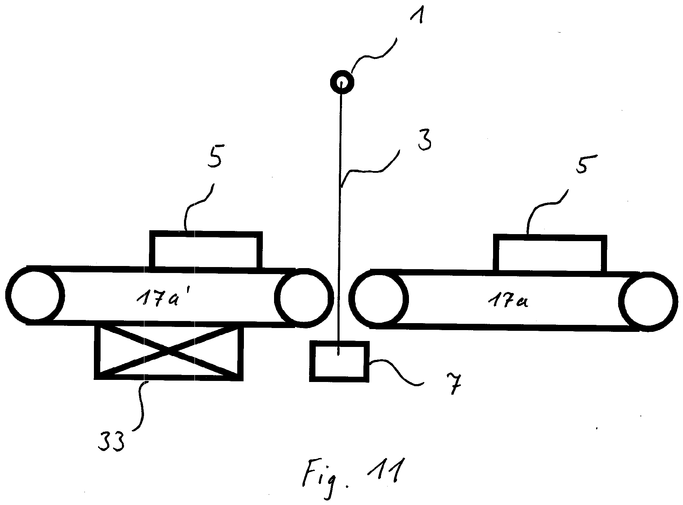

Nach der in Fig. 10 und Fig. 11 dargestellten Ausführungsform der Erfindung können die Einzelbänder 17a, 17b, 17c, 17d in Längsrichtung unmittelbar vor der Röntgeninspektionseinheit 19 (und damit vor dem Strahl 3) enden. Unmittelbar nach der Röntgeninspektionseinheit 19 bzw dem Strahl 3 schließen sich spurtreu und mit jeweils gleicher Geschwindigkeit die Bänder bzw. Gurte (Spuren) 17a', 17b', 17c', 17d' an. Somit ersetzen die Paare 17a,17a'; 17b,17b'; 17c,17c' und 17d,17d' in ihrer Funktion die in den vorhergehenden Ausführungsformen dargestellten durchgehenden Einzelbänder 17a, 17b, 17c, 17d, allerdings mit dem Unterschied, dass in dieser Ausführungform der Strahl 3 (neben einem Produkt 5a, 5b, 5c, 5d) kein Band 17a, 17b, 17c, 17d auf seinem Weg von Quelle 1 zum Detektor 7 durchdringen muss. Störende, insbesondere nicht konstante, Einflüsse (Verschmutzungen, Materialabweichungen, Nahtstellen, etc.) der Bänder 17a, 17b, 17c, 17d auf einen Durchleuchtungsvorgang können hierdurch vorteilhafterweise vermieden werden.

Der Spalt zwischen jeweiligen Bandpaaren 17a,17a'; 17b,17b'; 17c,17c' und 17d,17d' ist hierbei so gering, dass die Förderung der Produkte 5a, 5b, 5c, 5d nicht störend beeinflusst wird. In der in Fig. 10 und Fig. 11 dargestellten Ausführungsform ist die Waage bevorzugt nach der Röntgeninspektionseinrichtung 19 angeordnet und bevorzugt als Gesamtwaage 33 ausgebildet.

In bevorzugter Ausgestaltung mit einer nachgeordneten Waage ist es in den beliebigen Ausführungsformen der Erfindung zudem denkbar, dass ein Wiegen des letzten zu wiegenden Produkts 5a einer Gruppe 5a, 5b, 5c, 5d steuerungstechnisch zusätzlich weitere Aktionen, wie Abschalten der Röntgenquelle 1, Öffnen der Schotts 15, 21, Einlass der nächsten Gruppe benachbarter Produkte 5a, 5b, 5c, 5d etc., auslöst.

Alle steuerungstechnischen Vorgänge jeglicher Ausgestaltung der Erfindung, wie Übernahme der Produkte, Einlass/Auslass der Produkte in den bzw. aus dem strahlengeschützten Raum, Öffnen/Schließen der Schotts, Steuerung der Transportvorrichtungen (Gurte, Bänder, Stopper, etc.) Steuerung der Röntgeneinrichtung, Steuerung der Waage(-n), Umordnung der Produkte, Datenverarbeitung, etc., werden von einer Steuer- und/oder Auswertevorrichtung bekannter Art übernommen.

Selbstverständlich sind die Merkmale der unterschiedlichen, beispielhaft erläuterten Ausführungsbeispiele miteinander kombinierbar.

Als besondere Vorteile der Erfindung sind, neben einem kurzen und flachen Bauraum, die geringe erforderliche Breite, welche nur minimal größer als der Produktstrom ist, der hohe Durchsatz sowie eine ideale Anpassung an einen vorhandenen Produktstrom bzw. eine Produktionslinie im Sinne einer Black-Box Lösung (die nach außen völlig ohne Einfluss darstellt und einen scheinbar reinen Parallelbetrieb innerhalb der gesamten Produktionslinie ermöglicht), anzuführen.

### Bezugszeichenliste

- 1: Strahlungsquelle
- 3: fächerartige Durchleuchtungsstrahl
- 4: äußerster Strahl
- 5: Produkt
- 5a: Produkt
- 5b: Produkt
- 5c: Produkt
- 5d: Produkt
- 7: Detektor
- 9: rechter äußerer Strahl für Produkt 5b
- 10: linker äußerer Strahl für Produkt 5b
- 11: Zuführband
- 13: Röntgenraum
- 15: Schott-Einlass
- 17: Band bzw. Produktspur
- 17a: Einzelband (Spur) bzw. Gurt
- 17b: Einzelband (Spur) bzw. Gurt
- 17c: Einzelband (Spur) bzw. Gurt
- 17d: Einzelband (Spur) bzw. Gurt
- 19: Röntgeneinheit bzw. Röntgeneinrichtung
- 21: Schott-Auslass
- 23: Abführband
- 25: Slicer-Station
- 27: mechanische Vorrichtung
- 29: mechanische Vorrichtung
- 31a: Waage
- 31b: Waage
- 31c: Waage
- 31d: Waage
- 33: Gesamtwaage
- 35: Wägeband
- 37: Wägezelle
- 39: Einlaufband
- 41: gemeinsame Wägeplattform mit mehreren (Transport-)Spuren
- 43: Stopper
- 45: Ausgabestation
- T: Transportrichtung
- S: Senkrechte von Quelle 1 zu Produkt 5
- α: Winkel zwischen Strahl 4 und Senkrechte S

## Patentansprüche

1. Verfahren zum Durchleuchten von Produkten (5) eines Produktstroms mittels Röntgenstrahlung, wobei die Produkte (5) in Förderrichtung vor dem Durchleuchten in einem Produktstrom in einer Anzahl von n Spuren parallel nebeneinander gefördert werden,
**dadurch gekennzeichnet, dass**
mehrere quer zum Produktstrom benachbarte Produkte (5a, 5b, 5c, 5d) als eine Gruppe zusammen in einen strahlengeschützten Durchleuchtungsraum (13) übernommen werden und
die Produkte (5a, 5b, 5c, 5d) für einen Durchleuchtungsvorgang in dem Durchleuchtungsraum (13) umgeordnet werden, indem
die Produkte (5) vor oder während des Durchleuchtungsvorgangs derart serialisiert werden, dass die Produkte (5a, 5b, 5c, 5d) in Förderrichtung während eines Durchleuchtungsvorgangs in einer Anzahl von m Spuren relativ zu einem Durchleuchtungsstrahl (3) durch diesen Durchleuchtungsstrahl (3) bewegt werden, wobei die Anzahl m kleiner als die Anzahl n und größer oder gleich 1 ist.

2. Verfahren nach Anspruch 1,. **dadurch gekennzeichnet, dass** quer zum Produktstrom benachbarte Produkte (5a,5b; 5c,5d) in einer Anzahl m in Richtung einer Mittelsenkrechten S eines Durchleuchtungsstrahls (3) umgruppiert werden, wobei die Anzahl m kleiner als die Anzahl n und größer oder gleich 1 ist.

3. Verfahren nach einem der vorhergehenden Ansprüche, **dadurch gekennzeichnet, dass** die Produkte (5) nach dem Durchleuchten derart angeordnet werden, dass ihre relative Position zueinander der Position vor dem Durchleuchten entspricht.

4. Verfahren nach einem der vorhergehenden Ansprüche, **dadurch gekennzeichnet, dass** das Durchleuchten erfolgt, indem eine Strahlenquelle (1) und/oder ein Detektor (7) in einem Winkel größer Null und/oder parallel zur Transportrichtung (T) bewegt wird.

5. Verfahren nach einem der vorhergehenden Ansprüche, **dadurch gekennzeichnet, dass** das Durchleuchten erfolgt, indem eine Strahlenquelle (1) und/oder ein Detektor (7) still steht.

6. Verfahren nach einem der vorhergehenden Ansprüche, **dadurch gekennzeichnet, dass** vor, während oder nach dem Durchleuchten das Gewicht wenigstens einzelner seitlich und/oder in Transportrichtung benachbarter Produkte (5a, 5b, 5c, 5d) und/oder deren Gesamtgewicht mittels wenigstens einer Waage (31a, 31b, 31c, 31d, 33) ermittelt wird.

7. Verfahren nach einem der vorhergehenden Ansprüche, **dadurch gekennzeichnet, dass** wenigstens die Abstände zwischen außen geführten, quer zum Produktstrom benachbarten Produkten (5a,5b; 5d,5e) vergrößert werden.

8. Vorrichtung zum Durchleuchten von Produkten zur Durchführung des Verfahrens nach einem der vorhergehenden Ansprüche,
**dadurch gekennzeichnet, dass**
die Vorrichtung einen Durchleuchtungsraum (13) aufweist, welcher gegenüber der Umgebung strahlengeschützt ist,
der Durchleuchtungsraum eine Strahlenschutzeinrichtung aufweist, welche derart ausgebildet ist, dass mehrere quer zum Produktstrom benachbarte Produkte (5a, 5b, 5c, 5d) als eine Gruppe zusammen in den strahlengeschützten Durchleuchtungsraum (13) übernommen werden können und
die Vorrichtung Mittel aufweist, um die Produkte für ein Durchleuchten umzugruppieren, wobei
die Mittel dazu ausgebildet sind die Produkte (5) vor oder während des Durchleuchtungsvorgangs derart zu serialisieren, dass die Produkte (5a, 5b, 5c, 5d) in Förderrichtung während eines Durchleuchtungsvorgangs in einer Anzahl von m Spuren relativ zu einem Durchleuchtungsstrahl (3) durch diesen Durchleuchtungsstrahl (3) bewegt werden, wobei die Anzahl m kleiner als die Anzahl n und größer oder gleich 1 ist.

9. Vorrichtung nach Anspruch 8, **dadurch gekennzeichnet, dass** quer zum Produktstrom benachbarte Produkte (5a,5b; 5c,5d) in einer Anzahl m in Richtung einer Mittelsenkrechten S eines Durchleuchtungsstrahls (3) umgruppiert werden, wobei die Anzahl m kleiner als die Anzahl n und größer oder gleich 1 ist.

10. Vorrichtung nach Anspruch 8 oder 9, **dadurch gekennzeichnet**, das die Vorrichtung innerhalb einer Produktionslinie derart anordenbar ist, dass ein mehrspuriger Produktstrom von Produkten (5) hinsichtlich seiner Gesamtfördergeschwindigkeit und/oder -bewegung unbeeinflusst ist.

11. Anordnung aus einer Produktionslinie, insbesondere Lebensmittelproduktionslinie, mit einer Vorrichtung nach einem der Ansprüche 8 bis 10 .

## Claims

1. A method for transilluminating products (5) of a product stream by means of X-radiation, wherein the products (5) are conveyed in the conveying direction before the transillumination in a product stream in a number n of lanes parallel to each other,
**characterised in that**
a plurality of products (5a, 5b, 5c, 5d) that are adjacent transversely to the product stream are transferred as a group together into a radiation-protected transillumination room (13), and
the products (5a, 5b, 5c, 5d) are rearranged for a transillumination process in the transillumination room (13) **in that**
the products (5) are serialized before or during the transillumination process in such a way that the products (5a, 5b, 5c, 5d) are moved in a conveying direction during a transillumination process in a number m of lanes relative to a transillumination beam (3) through this transillumination beam (3), wherein the number m is smaller than the number n and greater than or equal to 1.

2. A method according to claim 1, **characterised in that** products (5a, 5b; 5c, 5d) that are adjacent transversely to the product stream are regrouped in a number m in the direction of a central vertical line S of a transillumination beam (3), wherein the number m is smaller than the number n and greater than or equal to 1.

3. A method according to one of the preceding claims,
**characterised in that** after the transillumination the products (5) are arranged in such a way that their relative position with respect to each other corresponds to the position before the transillumination.

4. A method according to one of the preceding claims,
**characterised in that** the transillumination is effected in that a radiation source (1) and/or a detector (7) are/is moved at an angle greater than zero and/or parallel to the transport direction (T).

5. A method according to one of the preceding claims,
**characterised in that** the transillumination is effected whilst a radiation source (1) and/or a detector (7) are/is stationary.

6. A method according to one of the preceding claims,
**characterised in that** before, during or after the transillumination the weight of at least individual products (5a, 5b, 5c, 5d) that are adjacent laterally and/or in the transport direction and/or their total weight are/is determined by means of at least one scale (31a, 31b, 31c, 31d, 33).

7. A method according to one of the preceding claims,
**characterised in that** at least the distances between products (5a, 5b; 5d, 5e) that are guided on the outside and are adjacent transversely to the product stream are increased.

8. A device for transilluminating products for carrying out the method according to one of the preceding claims,
**characterised in that**
the device has a transillumination room (13) which is radiation-protected with respect to the surroundings,
the transillumination room has a radiation-protection facility that is configured in such a way that a plurality of products (5a, 5b, 5c, 5d) that are adjacent transversely to the product stream can be transferred as a group together into the radiation-protected transillumination room (13), and
the device has means in order to regroup the products for transillumination, wherein
the means are configured to serialize the products (5) before or during the transillumination process in such a way that the products (5a, 5b, 5c, 5d) are moved in a conveying direction during a transillumination process in a number m of lanes relative to a transillumination beam (3) through this transillumination beam (3), wherein the number m is smaller than the number n and greater than or equal to 1.

9. A device according to claim 8, **characterised in that** products (5a, 5b; 5c, 5d) that are adjacent transversely to the product stream are regrouped in a number m in the direction of a central vertical line S of a transillumination beam (3), wherein the number m is smaller than the number n and greater than or equal to 1.

10. A device according to claim 8 or 9, **characterised in that** the device can be arranged within a production line in such a way that a multilane product stream of products (5) is unaffected in terms of its overall conveying speed and/or movement.

11. An arrangement consisting of a production line, in particular a production line for foodstuffs, having a device according to one of claims 8 to 10.

## Revendications

1. Procédé servant à éclairer par transparence des produits (5) d'un flux de produits au moyen d'un rayonnement X, dans lequel les produits (5) sont convoyés les uns à côté des autres de manière parallèle dans une direction de convoyage avant l'éclairage par transparence dans un flux de produits en un nombre de n voies,
**caractérisé en ce que**
plusieurs produits (5a, 5b, 5c, 5d) adjacents de manière transversale par rapport au flux de produits sont pris en charge en tant que groupe conjointement dans un espace d'éclairage par transparence (13) protégé des rayonnements, et
les produits (5a, 5b, 5c, 5d) sont réagencés pour une opération d'éclairage par transparence dans l'espace d'éclairage par transparence (13) **en ce que** les produits (5) sont sérialisés avant ou pendant l'opération d'éclairage par transparence de telle manière que les produits (5a, 5b, 5c, 5d) sont déplacés dans la direction de convoyage pendant une opération d'éclairage par transparence en un nombre de m voies par rapport à un rayon d'éclairage par transparence (3) à travers ledit rayon d'éclairage par transparence (3), dans lequel le nombre m est inférieur au nombre n et est supérieur ou égal à 1.

2. Procédé selon la revendication 1, **caractérisé en ce que** des produits (5a, 5b ; 5c, 5d) adjacents de manière transversale par rapport au flux de produits sont regroupés en un nombre m en direction d'une perpendiculaire médiane S d'un rayon d'éclairage par transparence (3), dans lequel le nombre m est inférieur au nombre n et est supérieur ou égal à 1.

3. Procédé selon l'une quelconque des revendications précédentes, **caractérisé en ce que** les produits (5) sont disposés après l'éclairage par transparence de telle manière que leur position relative les uns par rapport aux autres correspond à la position avant l'éclairage par transparence.

4. Procédé selon l'une quelconque des revendications précédentes, **caractérisé en ce que** l'éclairage par transparence est effectué **en ce qu'**une source de rayonnement (1) et/ou un détecteur (7) sont déplacés selon un angle supérieur à zéro et/ou de manière parallèle par rapport à la direction de transport (T).

5. Procédé selon l'une quelconque des revendications précédentes, **caractérisé en ce que** l'éclairage par transparence est effectué **en ce qu'**une source de rayonnement (1) et/ou un détecteur (7) sont à l'arrêt.

6. Procédé selon l'une quelconque des revendications précédentes, **caractérisé en ce qu'**avant, pendant ou après l'éclairage par transparence, le poids d'au moins divers produits (5a, 5b, 5c, 5d) adjacents de manière latérale et/ou dans la direction de transport et/ou leur poids total sont déterminés au moyen d'au moins une balance (31a, 31b, 31c, 31d, 33).

7. Procédé selon l'une quelconque des revendications précédentes, **caractérisé en ce qu'**au moins les espacements entre des produits (5a, 5b ; 5d, 5e) guidés côté extérieur, adjacents de manière transversale par rapport au flux de produits sont augmentés.

8. Dispositif servant à éclairer par transparence des produits servant à mettre en oeuvre le procédé selon l'une quelconque des revendications précédentes,
**caractérisé en ce que**
le dispositif présente un espace d'éclairage par transparence (13), qui est protégé contre les rayonnements par rapport à l'environnement,
l'espace d'éclairage par transparence présente un système de protection contre les rayonnements, lequel est réalisé de telle manière que plusieurs produits (5a, 5b, 5c, 5d) adjacents de manière transversale par rapport au flux de produits peuvent être pris en charge en tant que groupe conjointement dans l'espace d'éclairage par transparence (13) protégé contre les rayonnements, et
le dispositif présente des moyens afin de regrouper les produits pour un éclairage par transparence, dans lequel
les moyens sont réalisés pour sérialiser les produits (5) avant ou pendant l'opération d'éclairage par transparence de telle manière que les produits (5a, 5b, 5c, 5d) sont déplacés dans une direction de convoyage pendant une opération d'éclairage par transparence en un nombre de m voies par rapport à un rayon d'éclairage par transparence (3) par ledit rayon d'éclairage par transparence (3), dans lequel le nombre m est inférieur au nombre n et est supérieur ou égal à 1.

9. Dispositif selon la revendication 8, **caractérisé en ce que** des produits (5a, 5b ; 5c, 5d) adjacents de manière transversale par rapport au flux de produits sont regroupés en un nombre m en direction d'une perpendiculaire médiane S d'un rayon d'éclairage par transparence (3), dans lequel le nombre m est inférieur au nombre n et est supérieur ou égal à 1.

10. Dispositif selon la revendication 8 ou 9, **caractérisé en ce que** le dispositif peut être agencé à l'intérieur de la ligne de production de telle manière que la vitesse de convoyage totale et/ou le déplacement de convoyage total restent inchangés pour un flux de produits à plusieurs voies de produits (5).

11. Ensemble composé d'une ligne de production, en particulier d'une ligne de production de denrées alimentaires, avec un dispositif selon l'une quelconque des revendications 8 à 10.
